(19) Europäisches Patentamt
European Patent Office
Office européen des brevets

(11) EP 1 014 116 A1

(12) **EUROPEAN PATENT APPLICATION**
published in accordance with Art. 158(3) EPC

(43) Date of publication:
**28.06.2000 Bulletin 2000/26**

(21) Application number: **97946082.1**

(22) Date of filing: **03.12.1997**

(51) Int. Cl.$^7$: **G02B 5/18**, G02B 27/46

(86) International application number:
**PCT/JP97/04419**

(87) International publication number:
**WO 98/25167 (11.06.1998 Gazette 1998/23)**

(84) Designated Contracting States:
**DE FR GB NL**

(30) Priority: **03.12.1996 JP 32314796**

(71) Applicant:
**KUREHA KAGAKU KOGYO KABUSHIKI KAISHA**
**Tokyo 103-0012 (JP)**

(72) Inventors:
- **SHOUJI, Masuhiro**
  **Iwaki-shi, Fukushima 979-01 (JP)**
- **ICHIKAWA, Yukio**
  **Isaki-shi, Fukushima 974 (JP)**
- **KATONO, Hiroki**
  **Iwaki-shi, Fukushima 974 (JP)**
- **OGIHARA, Takeo**
  **Iwaki-shi, Fukushima 974 (JP)**

(74) Representative:
**Baverstock, Michael George Douglas et al**
**BOULT WADE TENNANT,**
**Verulam Gardens**
**70 Gray's Inn Road**
**London WC1X 8BT (GB)**

# (54) PHASE GRATING AND ITS MANUFACTURING METHOD

(57) A phase type diffraction grating having a trapezoidal waveform cross section at least on a grating surface side thereof is configured such that a trapezoidal coefficient (B/A) of the trapezoidal wave is $0.006 \leq B/A < 1$ (where A is the difference in area between a "complete trapezoid" circumscribing the trapezoidal wave and a "sine curve" inscribed in the "complete trapezoid"; and B is the difference in area between the "complete trapezoid" and "trapezoidal wave").

As a consequence, there is provided a phase type diffraction grating which reduces higher-order diffracted light components of a conventional phase grating having a trapezoidal form, and suppresses the decrease in MTF in a low spatial frequency region.

***Fig.2***

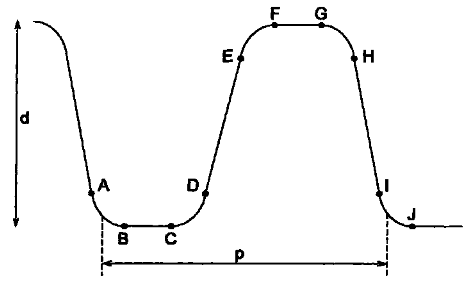


EP 1 014 116 A1

## Description

### Technical Field

The present invention relates to a phase type diffraction grating which is useful, for example, as an optical low-pass filter; and a method of making the same. The diffraction grating of the present invention is suitably usable, in particular, as an optical low-pass filter for preventing aliasing (waveform distortion) from occurring when images are discretely obtained by means of imaging devices such as CCD (Charge-Coupled Device) or the like in optical devices such as video camera, electronic still camera, digital camera, and the like.

### Background Art

In general, optical devices, such as TV camera, employing solid-state imaging devices with a discrete pixel configuration, such as CCD imaging device, optically subject image information to spatial sampling, so as to obtain output images.

In the spatial sampling, there has been known a phenomenon in which, when an object includes a high spatial frequency component exceeding the sampling frequency, then "pseudo signals" corresponding to the tint, structure, and the like that are not inherent in the object occur. Namely, since the high spatial frequency component that cannot be collected with the imaging devices (the spatial frequency component exceeding the Nyquist frequency) cannot be reproduced as image information, aliasing occurs, thereby generating moire fringes, pseudo colors, and the like in captured images. In order to restrain such moire fringes, pseudo colors, and the like from occurring in captured images, optical low-pass filter have conventionally been disposed in imaging systems (in front of CCD), so as to limit the high spatial frequency component of the object, thereby improving image quality. As the optical low-pass filters, those utilizing birefringence of rock crystal have often been used. However, using a quartz plate is problematic in that the cost of apparatus increases, and so forth.

Therefore, a phase type diffraction grating having irregularities with a depth on a par with that of the wavelength of light has been formed on a transparent glass or plastic sheet, so as to be used as an optical low-pass filter employing the diffraction effect of the diffraction grating. Its transfer characteristic (Modulation Transfer Function; MTF) is disclosed in literatures such as APPLIED OPTICS Vol. 11, No. 11, p. 2463-2472 (1972); Journal of the SMPTE Vol. 81, p. 282-285; and the like.

As for the MTF characteristic of the optical low-pass filter using a phase grating, it has been known that the MTF value in a low spatial frequency region is important in terms of image reproducibility and that the greater MTF value in the low spatial frequency region exerts more favorable influences on the contrast of the reproduced image.

Regarding the relationship between the form of phase gratings and the MTF value, there have been reports heretofore concerning MTF in phase grating forms with such cross sections as rectangular wave, triangular wave, trapezoidal wave, sinusoidal wave, and the like (see the above-mentioned literatures APPLIED OPTICS Vol. 11, No. 11, p. 2463-2472 (1972); and Journal of the SMPTE Vol. 81, p. 282-285.

The above-mentioned sinusoidal waveform phase grating emits only the diffracted light within the range of zero order and±first order, and its HTF in the low region is the greatest among the various cross-sectional forms mentioned above. However, since it is quite difficult in reality to uniformly form a groove having a sinusoidal waveform cross section with a depth on a par with the wavelength of light in a fixed area, triangular or trapezoidal waveform cross sections have been studied in practice.

However, higher-order light components are diffracted more in these rectangular or trapezoidal waveforms than in the sinusoidal waveform, namely, the decrease of MTF value in low spatial frequencies is greater, whereby contrast is lowered at the time of reproducing images. Hence, there has been a demand for improving these waveforms.

It is an object of the present invention to reduce higher-order diffracted light components of a conventional phase grating having a trapezoidal form, so as to provide a phase type diffraction grating which minimizes the decrease in MTF in a low spatial frequency region.

It is another object of the present invention to provide a method of making the phase type diffraction grating which is simple and capable of cutting down the cost.

### Disclosure of the Invention

As a result of diligent studies, the inventors have found that "rounding off" a trapezoidal portion of one unit period constituting a trapezoidal waveform cross section of a phase grating so as to yield a specific form not only reduces the emission of higher-order diffracted light but also lowers the decrease in MTF value in the low spatial frequency region.

The phase type diffraction grating in accordance with the present invention is based on the above-mentioned

finding and, more specifically, is a phase type diffraction grating having a trapezoidal waveform cross section at least on a grating surface side thereof, wherein a trapezoidal portion A to J of one unit period constituting the trapezoidal wave comprises four lines constituting an upper side part, a lower side part, and two oblique sides indicated in the following (Definition) and four curves connecting them, the lines constituting the upper side part, lower side part, and two oblique sides satisfying the following (Condition 1), whereas the curves connecting the lines to each other satisfying the following (Condition 2). (Definition of Trapezoidal Portion)

The trapezoidal portion comprising curve AB, line BC, curve CD, line DE, curve EF, line FG, curve GH, line HI, and curve IJ;

the height of the trapezoidal portion: d;
the period of the trapezoidal portion: p;
the lines whose inclinations are first-order differential coefficients at intersections k, l, m between a line at a height of d/2 and the trapezoidal portion; OP, QR, ST;
the line connecting points of the trapezoidal waveform at a height of 0: PT
the line connecting points of the trapezoidal waveform at a height of d: OS;
the trapezoidal wave constituted by the tangents OP. QR, ST and lines PQ, RS: P to T;
the lengths of the upper side, lower side, and two oblique sides of the trapezoidal wave as projected onto the line PT: u, v, w, and x, respectively;
the lengths of the upper side part line FG, lower side part line BC, and lines DE and HI constituting the two oblique sides in the trapezoidal portion A to J of one unit period constituting the trapezoidal wave as projected onto the line PT: u', v', w', and x', respectively.

(Condition 1)

$$0 \leq u'/u < 0.90$$

$$0 \leq v'/v < 0.90$$

$$0 \leq w'/w < 0.90$$

$$0 \leq x'/x < 0.90$$

(where $u + v + w + x = p$ .)

(Condition 2)

The curve AB constitutes a part of a curve which is downward convex;

the curve CD constitutes a part of a curve which is downward convex;
the curve EF constitutes a part of a curve which is upward convex;
the curve GH constitutes a part of a curve which is upward convex; and
the curve IJ constitutes a part of a curve which is upward convex.

Further, in accordance with the present invention, there is provided a phase type diffraction grating having a trapezoidal waveform cross section at least on a grating surface side thereof, wherein a trapezoidal coefficient (B/A) of the trapezoidal wave is $0.006 \leq B/A < 1$ (where A is the difference in area between a "complete trapezoid" circumscribing the trapezoidal wave and a "sine curve" inscribed in the "complete trapezoid"; and B is the difference in area between the "complete trapezoid" and "trapezoidal wave").

In accordance with the present invention, there is further provided a method of making a phase type diffraction grating comprising the steps of:

using a masking member disposed on a grating-pattern-depositing surface of a substrate, the masking member having a plurality of linear members, each having a circular cross section, arranged parallel to each other; and
depositing, by vacuum vapor deposition from the masking member side to the substrate surface, a grating pattern shaped like a trapezoidal wave onto the substrate.

**Brief Description of the Drawings**

Fig. 1 is a schematic sectional view showing the cross-sectional form of a conventional phase type diffraction grating having a trapezoidal cross section;
Fig. 2 is a schematic sectional view showing the cross-sectional form of the phase type diffraction grating in accordance with the present invention having a cross section with a trapezoidal wave pattern (having smooth shoulder parts);
Fig. 3 is a schematic sectional view showing the state where Figs. 1 and 2 are overlaid on each other;
Fig. 4 is a schematic sectional view for explaining the difference A in area between a "complete trapezoid" and a sine curve;
Fig. 5 is a schematic sectional view for explaining the difference B in area between the "complete trapezoid" and a trapezoidal wave pattern of the present invention (having smooth shoulder parts);
Fig. 6 is a schematic sectional view showing an embodiment of the phase type diffraction grating in accordance with the present invention;
Fig. 7 is a schematic sectional view for explaining an example of the method of making a phase type diffraction grating (method of making a matrix) in accordance with the present invention;
Fig. 8 is a schematic sectional view for explaining an example of the method of making a phase type diffraction grating (method of making a replica from the matrix) in accordance with the present invention; and
Fig. 9 is a graph showing actual results of measurement of the cross section of the phase type diffraction grating in accordance with the present invention obtained in an example.

**Best Modes for Carrying Out the Invention**

In the following, the present invention will be explained more specifically with reference to the drawings when necessary. In the following descriptions, "part" and "%" indicating quantity and ratio are based on mass unless otherwise specified.

(Cross-sectional Form of Phase Grating)

First, before explaining the cross-sectional form of the phase grating in accordance with the present invention, the cross-sectional form of the conventional phase grating will be described. The schematic sectional view of Fig. 1 shows an example of the conventional phase grating. Fig. 1 shows the cross section of a trapezoidal phase grating, whose pitch is p, with its scale enlarged along the depth direction.
Referring to Fig. 1, for constituting one period of a trapezoidal wave, sides OP, PQ, QR, RS, and ST are lines, with each pair of sides OP and PQ, sides PQ and QR, sides QR and RS, and sides RS and ST forming an acute or obtuse angle.
Fig. 2 is a schematic sectional view showing the cross-sectional form of the trapezoidal wave phase grating (having a pitch of p) in accordance with the present invention. The cross-sectional form in Fig. 2 differs from the above-mentioned trapezoidal form (conventional one) in Fig. 1 in that each of the four corner parts of the trapezoid is constituted by a curve.
The above-mentioned cross-sectional form will be explained in further detail with reference to the schematic sectional view of Fig. 3 which is obtained when Figs. 1 and 2 mentioned above are overlaid on each other.
Referring to Fig. 3, the above-mentioned trapezoid shown in Fig. 1 and the trapezoidal wave shown in Fig. 2 have the same pitch p, while the trapezoidal wave shown in Fig. 2 has a form in which the corners of the trapezoidal wave in Fig. 1 are rounded.
More specifically, it is characterized in that, in a phase grating whose cross-sectional form is shaped like a trapezoidal wave, a trapezoidal portion A to J of one unit period constituting the trapezoidal wave is a trapezoidal portion which comprises four lines constituting an upper side part, a lower side part, and two oblique sides and four curves connecting them, the lines constituting the upper side part, lower side part, and two oblique sides satisfying the following (Condition 1), whereas the curves connecting the lines to each other satisfying the following (Condition 2).

(Definition of Trapezoidal Portion)

The trapezoidal portion comprising curve AB, line BC, curve CD, line DE, curve EF, line FG, curve GH, line HI, and curve IJ;

the height of the trapezoidal portion: d;

the period of the trapezoidal portion: p;

the lines whose inclinations are first-order differential coefficients at intersections k, l, m between a line at a height of d/2 and the trapezoidal portion: OP, QR, ST;

the line connecting points of the trapezoidal waveform at a height of 0: PT

the line connecting points of the trapezoidal waveform at a height of d: OS;

the trapezoidal wave constituted by the tangents OP, QR, ST and lines PQ, RS: P to T;

the lengths of the upper side, lower side, and two oblique sides of the trapezoidal wave as projected onto the line PT: u, v, w, and x, respectively;

the lengths of the upper side part line FG, lower side part line BC, and lines DE and HI constituting the two oblique sides in the trapezoidal portion A to J of one unit period constituting the trapezoidal wave as projected onto the line PT: u', v', w, and x', respectively.

(Condition 1)

$$0 \leq u'/u < 0.90$$

$$0 \leq v'/v < 0.90$$

$$0 \leq w'/w < 0.90$$

$$0 \leq x'/x < 0.90$$

(where u + v + w + x = p .)

(Condition 2)

The curve AB constitutes a part of a curve which is downward convex;

the curve CD constitutes a part of a curve which is downward convex;

the curve EF constitutes a part of a curve which is upward convex;

the curve GH constitutes a part of a curve which is upward convex; and

the curve IJ constitutes a part of a curve which is upward convex.

In the abovementioned (Condition 1), it is further preferred from the viewpoint of improving MTF characteristics that the following conditions be satisfied:

$$0 \leq u'/u \leq 0.80$$

$$0 \leq v'/v \leq 0.80$$

$$0 \leq w'/w \leq 0.80$$

$$0 \leq x'/x \leq 0.80$$

In the above-mentioned (Condition 1), it is particularly preferred that the following conditions be satisfied:

$$0 \leq u'/u \leq 0.60$$

$$0 \leq v'/v \leq 0.60$$

$$0 \leq w'/w \leq 0.60$$

$$0 \leq x'/x \leq 0.60$$

(Trapezoidal Coefficient)

In the present invention, the specific cross-sectional form (trapezoidal wave) of the above-mentioned phase grating can also be defined by "trapezoidal coefficient." Here, the "trapezoidal coefficient" is defined by the ratio (B/A) of the difference B in area, such as that shown in Fig. 5, between a "complete trapezoid" circumscribing the trapezoidal wave and the "trapezoidal waveform" in accordance with the present invention to the difference A in area, such as that shown in Fig. 4, between the "complete trapezoid" and a "sine curve" inscribed in the "complete trapezoid."

In the present invention, the above-mentioned "trapezoidal coefficient" (B/A) is preferably $0.006 \leq B/A < 1$, more preferably $0.02 \leq B/A < 1$, further preferably $0.1 \leq B/A < 1$ ($0.15 \leq B/A < 1$ 0.015 in particular).

In the present invention, as the pattern formed on the phase grating surface is shaped into a specific form such as that mentioned above, the drop in MTF value in a low region can be made smaller than that in the MTF of the conventionally used phase type diffraction grating having a rectangular or trapezoidal pattern (Fig. 1).

In addition, when the phase grating having a specific trapezoidal waveform of the present invention formed on a surface thereof is employed in an imaging system (using a CCD or the like), an image with a contrast better than that of the conventional phase grating having a rectangular or trapezoidal pattern (Fig. 1) can be obtained. (Diffraction Grating)

Fig. 6 is a schematic sectional view showing an example of an actual embodiment of the phase type diffraction grating in accordance with the present invention. Referring to Fig. 6, the diffraction grating in this embodiment is constituted by a transparent substrate 1 (made of glass, plastic, or the like) and a grating pattern 2 (made of $SiO_2$, a composite oxide such as glass, or the like) having a trapezoidal waveform cross section and placed on substrate 1. The above-mentioned substrate 1 and grating pattern 2 may be constituted by the same material or, when necessary, by different materials. From the viewpoint of enabling the grating pattern 2 to be formed by a convenient method, the grating pattern 2 is preferably made of a material which can be deposited by a vacuum vapor deposition method (e.g., $SiO_2$, a composite oxide such as glass, $TiO_2$, or the like). From the viewpoint of easily making replicas with a good reproducibility, on the other hand, the substrate 1 is preferably made of a heat-resistant material (e.g., glass, metal, organic matter such as plastic, or the like) which is tolerant of the heat generated when a polymer is formed upon polymerization.

The method of making the diffraction grating of the present invention mentioned above is not restricted in particular as long as it has a cross section shaped into the above-mentioned predetermined trapezoidal waveform. For example, such methods as mechanical ruling, two-beam interference, etching, vacuum vapor deposition, and the like can be used without any particular restriction. (For details of such a method of making a diffraction grating, reference can be made, for example, to Teruji Ose et al., "Optical Engineering Handbook," p. 527-531 (1968), Asakura Shoten.)

(First Making Method)

A preferred method of making a phase type diffraction grating formed with the above-mentioned specific trapezoidal wave pattern (Fig. 2) on a surface thereof will now be described.

Referring td the schematic sectional view of Fig. 7, in the first method of making the above-mentioned diffraction grating, when forming the film-like grating pattern 2 on the surface of the substrate 1 by means of the vacuum vapor deposition method, a wire member 3 having a circular cross section is used as a masking member. When the wire member 3 having a circular cross section is used as a masking member, then the vacuum vapor deposition film also sneaks into the parts shadowed by the masking member at the time of vacuum vapor deposition (or vacuum deposition) as shown in Fig. 7, whereby the trapezoidal wave pattern of the present invention (Fig. 2) can be formed with a good reproducibility.

The usable diameter (L) of the wire member 3, as long as it is smaller than the pitch size (P) of the grating, can appropriately be selected according to the form of the trapezoidal wave pattern 2 (degree of vertical symmetry) needed. According to the aimed MTF characteristics necessitated, the ratio (L/P) of the above-mentioned diameter (L) of the wire member 3 to the pitch size (P) of the grating is preferably on the order of 0.01 to 0.95, more preferably on the order of 0.1 to 0.9.

The wire member 3 can be made of any material as long as it can be processed as the wire member. For example, materials such as typical metals (simple substances or alloys), ceramics, carbon fibers, plastics, and the like can be used. From the viewpoint of reproducibility in grating pitch and grating form, it is preferred that a material (e.g., a metal material such as titanium or stainless steel, ceramic, or the like) which emits little gas at the time of vacuum vapor deposition and is less likely to deform upon thermal expansion be used for the wire member 3.

As the vacuum vapor deposition method applicable to the making of a diffraction grating, various methods usually employed as means for forming a thin film on a substrate surface such as vacuum evaporation (e.g., resistance-heating or electron beam type vacuum evaporation), ion beam vacuum vapor deposition, DC (direct current) or RF (radio frequency) sputtering, CVD (chemical vapor deposition), and the like can be used without any restriction in particular. At the time of vacuum vapor deposition, the substrate may be heated as needed.

The material usable in this method as the substrate 1 on which the above-mentioned trapezoidal wave pattern 2 is to be formed is not restricted in particular as long as light beams can be transmitted therethrough. The materials usable as a substrate for vacuum vapor deposition such as glass, plastics, inorganic crystals, and the like can usually be used in this method. When selecting the substrate 1, the one having a chromatic filter function for absorbing and/or reflecting a specific wavelength in ultraviolet, visible, and infrared wavelengths can also be used as required.

(Second Making Method)

A second making method uses the glass sheet 2 with above-mentioned trapezoidal wave pattern 1 formed thereon as a matrix, so as to yield a diffraction grating (replica) by a casting polymerization method.

As the substrate (matrix) in which the trapezoidal wave pattern 2 is formed on the glass sheet 1, the one obtained by the above-mentioned first making method can be used. When the glass sheet 1 having the trapezoidal wave pattern 2 is used as the matrix for the casting polymerization, then the trapezoidal wave pattern of the present invention can be transferred to the surface of the replica made of a synthetic resin easily at a low cost.

As the monomer having a polymerizable functional group which can be used at the time of such casting polymerization, methyl (meth)acrylate, ethyl (meth)acrylate, n-butyl (meth)acrylate, t-butyl (meth)acrylate, isobutyl (meth)acrylate, 2-ethylhexyl (meth)acrylate, isodecyl (meth)acrylate, n-lauryl (meth)acrylate, tridecyl (meth)acrylate, n-stearyl (meth) acrylate, isobornyl (meth)acrylate, methoxyethyl (meth)acrylate, ethoxyethyl (meth)acrylate, phenoxyethyl (meth)acrylate, and the like can be used, in combination of two or more kinds when necessary, as a monofunctional monomer.

In addition to the above-mentioned monomers, a multifunctional monomer having a plurality of polymerizable functional groups may be used as well. As such a multifunctional monomer, di(meth)acrylate of ethylene glycol derivatives, butanediol dimethacrylate, hexanediol dimethacrylate, trimethylolpropane tri(meth)acrylate, pentaerythritol (meth)acrylate derivatives, various kinds of urethane acrylate, (meth)acrylate of epoxy esters, and the like can be used, in combination of two or more kinds when necessary.

These monomers may be used as a mixed monomer in which they are appropriately mixed together, in response to physical properties necessitated as a diffraction grating, e.g., required characteristics such as refractive index, thermal deformation temperature, tinting upon heating, modulus of rigidity, and the like.

As the polymerization method, for example, as shown in the schematic sectional view of Fig. 8, with respect to a matrix 11 having the trapezoidal wave pattern in accordance with the present invention formed on a surface thereof in a state where this surface faces inside, another surface-polished matrix 12 is set with a predetermined gap on one side or each of both sides of the matrix 11; peripheries of these matrices are sealed by seal 13 so as to keep liquids from spilling out; and then the above-mentioned monomer 14 mixed with an appropriate amount of a polymerization initiator (e.g., a peroxide) added thereto is injected into the space between the matrices. It will be sufficient if, after the completion of monomer injection, the monomer between the matrices is polymerized and solidified by means of heating (e.g., heating in an oven).

In the diffraction grating of the present invention, a phase grating may be formed on one side or each of both sides of a filter. In the case where phase gratings are formed on both sides of the filter, the phase grating formed on one side of the filter may have an MTF characteristic with a cutoff property corresponding to the horizontal Nyquist spatial frequency of CCD devices, and the phase grating formed on the other side of the filter may have an MTF characteristic with a cutoff property corresponding to the vertical Nyquist spatial frequency of the CCD devices.

Since the phase grating of the present invention is shaped like stripes (lines), when both sides of the filter are formed with phase gratings, the angle formed between the respective grating lines of the linear phase gratings of both sides is preferably set to 80° to 100°, more preferably to 85° to 95° (88° to 92° in particular), from the viewpoint of efficiently exhibiting an optical low-pass filter function in horizontal and vertical directions of CCD. When this angle is less than 80° or more than 100°, the function as an optical low-pass filter for CCD tends to deteriorate.

As the material for forming the diffraction grating of the present invention, materials having no wavelength selectivity, such as glass, transparent plastic, and the like, can be used. From the viewpoint of imparting a near infrared absorption property to the material for forming the diffraction grating itself so as to provide it with a function of correcting the sensitivity of CCD devices and the like (luminous efficiency correction), the material preferably contains a copolymer obtained by copolymerizing a monomer composition comprising a phosphate-group-containing monomer expressed by the following formula (1) and a monomer copolymerizable therewith, and a metal ion component mainly composed of divalent copper ion.

$$PO(OH)_n R_{3-n} \qquad (1)$$

where R is

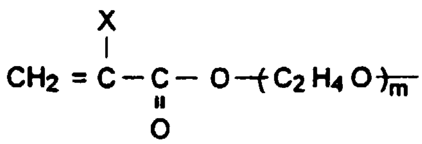

(wherein X indicates a hydrogen atom or methyl group, m indicates an integer from 1 to 5, and n is 1 or 2).

(Method of Making Polymer Containing Divalent Copper Ion)

In the case where a transparent substrate is made of a polymer containing divalent copper ion, it is preferred, from the viewpoint of dispersibility of copper ion, that a metal ion mainly composed of copper ion be contained in the copolymer obtained from the monomer mixture made of the above-mentioned phosphate-group-containing monomer (1) and copolymerizable monomer.

The above-mentioned phosphate-group-containing monomer (1) has a phosphate group which is combinable with copper ion, which will be described later, in its molecule structure. A copolymer holding copper ion by way of such a phosphate group exhibits a characteristic light absorption property in the near infrared region.

In the molecule structure of the above-mentioned phosphate-group-containing monomer, since acryloyloxy groups or methacryloyloxy groups which are radically polymerizable functional groups are combined together by way of an ethylene oxide group, the phosphate-group-containing monomer is quite rich in copolymerizability, thus being copolymerizable with various kinds of monomers.

Further, a phosphate group is combined into this monomer molecule, and this phosphate group combines with copper ion, thereby yielding a copolymer which exhibits a high tranamissivity in the visible light region while efficiently absorbing the wavelength light in the near infrared region.

In the above-mentioned formula (1), R is an acrylic group (X = hydrogen atom) or methacrylic group (X = methyl) combined with an ethylene oxide group whose repetition number is m. In the above-mentioned R, m is an integer from 1 to 5. If m exceeds 5, then the hardness of the resulting copolymer tends to decrease, whereby there is a possibility of the practical utility as the diffraction grating deteriorating.

The number of hydroxyl groups n can be either 1 or 2 depending on the method of forming the diffraction grating, the purpose and application of the grating, and the like. When the value of n is 2, the above-mentioned phosphate-group-containing monomer (1) becomes a monomer which exhibits a high bonding property to ionic metal ingredients such as copper ion, while having one radically polymerizable functional group. When the value of n is 1, on the other hand, the above-mentioned phosphate-group-containing monomer (1) becomes a monomer which has two radically polymerizable functional groups, exhibiting crosslinking polymerizability.

Therefore, in the case where the diffraction grating substrate constituting the diffraction grating of the present invention is formed by injection molding or extrusion molding, which is a typical forming and processing method of a thermoplastic resin, it is preferable to use the phosphate-group-containing monomer (1) whose n is 2. The forming method employable in the present invention is not restricted thereto, however.

Thus, while the value of n can thus be selected according to the performances, forming method, or purpose of the optical diffraction grating in the present invention, it is preferred that the phosphate-group-containing monomer (1) in which n = 1 and the phosphate-group-containing monomer (1) in which n = 2 be used together from the viewpoint of solubility of copper ion to the monomer. In this case, it will be preferable if the monomer (1) with n = 1 and the monomer (1) with n = 2 are used with a molar ratio of 1:5 to 5:1 (more preferably 3:5 to 5:3), since the solubility of the metal compound, which is a source of the metal ion mainly composed of copper ion, to the resulting mixture of monomers will be enhanced thereby. In particular, it is preferred that these two kinds of the phosphate-group-containing monomers be used at a ratio where they have substantially the same amount (e.g., at a molar ratio of (n = 1)/(n = 2) = 4/6 to 6/4 or, more preferably, 5/5.5 to 5.5/4.5).

As the polymer constituting the major part of the diffraction grating in accordance with the present invention, a copolymer containing the phosphate-group-containing monomer (1) and a monomer copolymerizable therewith is preferably used. As compared with a single polymer (homopolymer) of the phosphate-group-containing monomer (1), such a copolymer can more easily provide a molded article which exhibits a reduced amount of hygroscopicity, improved softness, and excellent form retention.

Such a copolymerizable monomer is not limited in particular as long as 1) it uniformly dissolves in and mixes with the phosphate-group-containing monomer (1), 2) it exhibits a favorable radical copolymerizability with the phosphate-group-containing monomer (1), and 3) it yields an optically transparent copolymer.

Examples thereof include:

monofunctional acrylates and monofunctional methacrylates (hereinafter simply referred to as monofunctional (meth)acrylates) such as methyl acrylate, methyl methacrylate, ethyl acrylate, ethyl methacrylate, 2-hydroxyethyl acrylate, 2-hydroxyethyl methacrylate, n-propyl acrylate, n-propyl methacrylate, 2-hydroxy propyl acrylate, 2-hydroxy propyl methacrylate, n-butyl acrylate, n-butyl methacrylate, isobutyl acrylate, isobutyl methacrylate, 2-hydroxy butyl acrylate, 2-hydroxy butyl methacrylate, n-hexyl acrylate, n-hexyl methacrylate, n-heptyl acrylate, n-heptyl methacrylate, n-octyl acrylate, n-octyl methacrylate, 2-ethyl hexyl acrylate, 2-ethyl hexyl methacrylate, glycidyl acrylate, glycidyl methacrylate, 2-hydroxy-3-phenoxy propyl acrylate, 2-hydroxy-3-phenoxy propyl methacrylate, phenoxy polyethylene glycol acrylate, phenoxy polyethylene glycol methacrylate, methoxy polyethylene glycol acrylate, methoxy polyethylene glycol methacrylate, 3-chloro-2--hydroxy propyl acrylate, 3-chloro-2-hydroxy propyl methacrylate, and the like;

polyfunctional acrylates or methacrylates such as ethylene glycol diacrylate, ethylene glycol dimethacrylate, diethylene glycol diacrylate, diethylene glycol dimethacrylate, polyethylene glycol diacrylate, polyethylene glycol dimethacrylate, polypropylene glycol diacrylate, polypropylene glycol dimethacrylate, 1,3-butylene glycol diacrylate, 1,3-butylene glycol dimethacrylate, 1,4-butanediol diacrylate, 1,4-butanediol dimethacrylate, 1,6-hexanediol diacrylate, 1,6-hexanediol dimethacrylate, neopentyl glycol diacrylate, neopentyl glycol dimethacrylate, 2-hydroxy-1,3-dimethacryloxy propane, 2,2-bis[4-(methacryloxyethoxy)phenyl propane], 2-hydroxy-1-acryloxy-3-methacryloxy propane, trimethylolpropane trimethacrylate, trimethylolpropane triacrylate, pentaerythritol triacrylate, pentaerythritol trimethacrylate, pentaerythritol tetraacrylate, pentaerythritol tetramethacrylate, and the like;

carboxylic acids such as acrylic acid, methacrylic acid, 2-methacryloyloxyethyl succinic acid, 2-methcryloyloxyethyl phthalic acid, and the like; and aromatic vinyl compounds such as styrene, $\alpha$-methylstyrene, chlorostyrene, dibromostyrene, methoxystyrene, divinylbenzene, vinyl benzoic acid, hydroxymethylistyrene, trivinylbenzene, and the like. These monomers can be used alone or in combinations of two or more kinds as required.

In the present invention, the ratio of the phosphate-group-containing monomer (1) in 100 parts by mass of monomer mixture for a copolymer is preferably 3 to 60 parts by mass (more preferably 5 to 50 parts by mass). When this ratio is less than 3 parts by mass, a predetermined light absorption characteristic tends to deteriorate. When the ratio exceeds 60 parts by mass, on the other hand, a soft molded article having a high hygroscopicity tends to be generated.

The copolymer used in the major part of the diffraction grating in accordance with the present invention can usually be obtained when the phosphate-group-containing monomer (1) and the monomer copolymerizable therewith mentioned above are radically polymerized. Here, for the "ionic metal ingredient" mentioned later, a metal compound which becomes its source may be dissolved in and mixed with the monomer mixture, so as to effect the radical polymerization. The radical polymerizing method is not restricted in particular; for example, known methods such as bulk (cast) polymerization, suspension polymerization, emulsion polymerization, and solution polymerization using a usual radical polymerization initiator, and the like can be employed.

In a mode where the polymer constituting the diffraction grating substrate of the present invention is made of a polymer containing a metal ion mainly composed of copper ion, the metal ion is effective in efficiently absorbing the wavelength light in the near infrared region according to the mutual action with the phosphate group contained within the copolymer. This metal ion may mainly be constituted by divalent copper ion, and may include a small amount of other metal ions as well. Here, "mainly composed of copper ion" refers to the state where the ratio of copper ion in all the metal ions in the polymer is at least 50% (by mass). When the ratio of copper ion is less than 50%, the absorption efficiency of the resulting diffraction grating for the wavelength light in the near infrared region tends to decrease. From the viewpoint of absorption efficiency in the near infrared region, the ratio of copper ion is preferably 70% or more (more preferably 80% or more).

The metal ion mainly composed of copper ion is preferably used by 0.1 to 20 parts by mass (more preferably 0.5 to 15 parts by mass) per 100 parts by mass of the copolymer in accordance with the present invention. When the metal ion amount is less than 0.1 part by mass, the efficiency of wavelength light absorption in the near infrared region decreases. When the metal ion amount exceeds 20 parts by mass, on the other hand, it becomes more difficult for the metal ion to be uniformly dispersed in the copolymer.

The copper ion in the present invention can be supplied from various kinds of copper compounds. Examples of the copper compounds include anhydrates and hydrates of copper acetate, copper chloride, copper formate, copper stearate, copper benzoate, copper ethyl acetoacetate, copper pyrophosphate, copper naphthenate, copper citrate, and the like, without being restricted thereto.

Also, in the present invention, within the range of less than 20% by mass of the total metal ion amount, "other metal ions" such as sodium, potassium, calcium, iron, manganese, cobalt, magnesium, nickel, zinc, and the like can be used as required.

Though the method of causing the metal ion mainly composed of copper ion to be contained in the polymer (or copolymer) constituting the diffraction grating of the present invention is not restricted in particular, a method comprising the steps of dissolving the above-mentioned metal ion or copper compound in a monomer composition or mixture for yielding a polymer and carrying out radical polymerization can preferably be used from the viewpoint of easiness in manufacture.

This method causes the above-mentioned metal ion to be contained in the material; prepares a monomer mixture comprising the metal, phosphate-group-containing monomer (1), and copolymerizable monomer; and radically polymerizes this monomer mixture. Since thus obtained copolymer contains therein the metal ion mainly composed of copper ion, the polymer as it is or after being shaped into the aimed form (e.g., planar form) and/or ground can be used for the diffraction grating of the present invention.

In the following, the present invention will be explained further specifically with reference to Examples.

<u>Example</u>

<u>Example 1</u>

(Making of Glass Matrix with Grating)

Referring to Fig. 7, on a masking member in which 200 titanium wires 3 each having a diameter of 0.21 mm were stretched with identical intervals having a pitch of 0.43 mm, a substrate 1 made of a borosilicate glass sheet (having a diameter of 81 mm and a thickness of 5 mm), subjected to chemical reinforcing processing (immersion in a potassium nitrate solution at 400°C for 16 hours), having an optically grounded surface, was mounted. The glass sheet 1 was set in a state where a predetermined load (load of about 500 g in a direction perpendicular to the glass surface) was applied thereto such that the glass sheet 1 did not float up from the titanium wires 3 of the masking member. (For details of such a method of arranging wire members, reference can be made to Japanese Patent Application No. 8-69740 filed on March 26, 1996, for example.)

Subsequently, while in the state set to the masking member 3 as mentioned above, the glass sheet 1 was mounted to a vacuum evaporation apparatus, and vacuum evaporation of $SiO_2$ was carried out by an electron beam heating method from the titanium wire 3 side of the masking member (evaporation rate: 100 angstroms/minute; evaporation time: 42 minutes). During the vacuum evaporation, heating was carried out such that the temperature of the glass substrate 1 became 300 degrees. The sample ($SiO_2$/glass substrate) after the completion of vacuum evaporation appeared transparent when viewed with the naked eye.

The graph of Fig. 9 shows the results obtained when the form of the phase type filter formed on the glass substrate surface was measured with a commercially available stylus type thickness meter (manufactured by Sloan Technology Corporation; product name: Dektak). As shown in Fig. 9, it was confirmed that the cross-sectional form of the filter was a trapezoidal wave with smoothed shoulder parts, having a grating depth of 420 nm and a pitch of 0.43 mm.

Further, the cross-sectional form of the filter shown in Fig. 9 satisfied both of the following (Condition 1) and (Condition 2).

(Condition 1)

$$u'/u = 0.5$$

$$v'/v = 0.5$$

$$w'/w = 0.5$$

$$x'/x = 0.5$$

where $u + v + w + x = 0.43$ mm.

(Condition 2)

The curve AB constitutes a part of a curve which is downward convex;

the curve CD constitutes a part of a curve which is downward convex;
the curve EF constitutes a part of a curve which is upward convex;

the curve GH constitutes a part of a curve which is upward convex; and
the curve IJ constitutes a part of a curve which is upward convex.

Example 2

(Making of Optical Low-Pass Filter Made of Transparent Plastic Using Glass-Made Matrix)

Referring to Fig. 8, one surface of a glass sheet having a diameter of 81 mm and a thickness of 5 mm was optically ground, so as to form a planar mold. The optically ground surface of thus obtained planar mold and the phase-grating-formed surface of the grating-equipped mold were caused to face each other, and a cavity having a thickness of 1 mm was formed. Then, end portions of the matrix comprising the above-mentioned planar mold and grating-equipped glass-made matrix were sealed with a seal tape having an adhesive based on PET (polyethylene terephthalate).

An acrylic thermosetting monomer mixture having the following composition was injected into the above-mentioned cavity, and contained in an oven at a predetermined temperature (50°C), so that a polymerization reaction was effected for 20 hours.

(Composition of Monomer Mixture)

| | |
|---|---|
| 1,6-hexanediol dimethacrylate | 10 parts by mass |
| methyl methacrylate | 89 parts by mass |
| α-methylstyrene | 1 part by mass |
| t-butyl peroxy pivalate | 0.5 part by mass |

(Polymerization Initiator)

After the completion of the above-mentioned polymerization, the matrices on both sides (planar mold and grating-equipped mold) were released from the resulting polymerization product, thereby yielding a transparent plastic-made phase grating having a thickness of 1 mm, whose one surface is inscribed with the grating transferred thereto. The refractive index of thus manufactured phase grating was measured with a commercially available refractive index measuring apparatus (manufactured by Kalnew Optical Industrial Co., Ltd.; product name: Kalnew refractometer) and found to be 1.497 at a wavelength of 546 nm.

When the cross-sectional form of thus obtained plastic-made phase grating was measured by a method similar to that in Example 1, it was found to be a form substantially similar to that in Example 1 (having a grating depth of 415 nm and a pitch of 0.425 mm), having a trapezoidal wave (form with smoothed shoulder parts) which satisfies both of the above-mentioned (Condition 1) and (Condition 2). The above-mentioned trapezoidal coefficient (B/A) determined according to the above-mentioned cross-sectional form was 0.165.

Further, when MTF was measured with a commercially available MTF measuring apparatus (manufactured by Image Science, Inc.; product name: OPAL MTF measuring apparatus) at a wavelength of 550 nm, the value thereof was 96.5% at a spatial frequency of 10/mm.

Example 3

(Making of Optical Low-Pass Filter Made of Plastic Containing Phosphate Ester and Copper Ion)

In a manner similar to Example 2, one surface of a glass sheet having a diameter of 81 mm and a thickness of 5 mm was optically ground, so as to form a planar mold. The optically ground surface of thus obtained planar mold and the phase-grating-formed surface of the grating-equipped mold obtained in Example 1 were caused to face each other, and a cavity having a thickness of 1 mm was formed. Then, end portions of the matrix comprising the above-mentioned planar mold and grating-equipped glass-made matrix were sealed with a seal tape having a PET-based adhesive (Fig. 8).

Separately, the following individual ingredients of a monomer were mixed together, 32 parts of copper benzoate anhydride (copper ion amount being 6.6 parts with respect to 100 parts of the total monomer amount) were added thereto, and the mixture was stirred and mixed at 80°C so as to fully dissolve together, thereby yielding a monomer composition in which the above-mentioned copper benzoate anhydride was dissolved into the mixed monomer.

(Monomer Ingredients)

phosphate-group-containing monomer represented by the following formula (2) (where X = $CH_3$, m = 1, n = 1 in the general formula (1))

32 parts

phosphate-group-containing monomer represented by the following formula (3) (where X = $CH_3$, m = 1, n = 2 in the general formula (1))

13 parts

| | |
|---|---|
| methyl methacrylate | 34 parts |
| diethylene glycol dimethacrylate | 20 parts |
| $\alpha$-methylstyrene | 1 part |

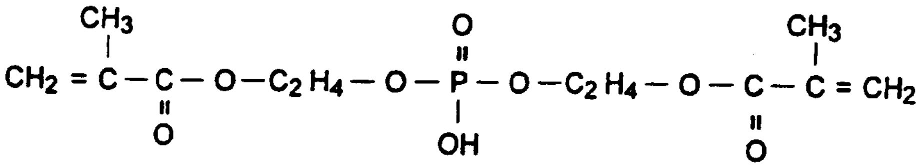

···(2)

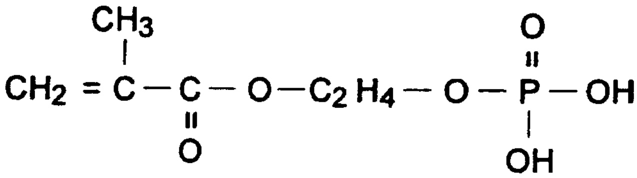

···(3)

To thus prepared monomer composition, 2 parts of t-butyl peroxide (2-ethyl hexanoate) were added as a polymerization initiator, whereby a monomer composition containing copper ions was obtained.

Into the cavity of the above-mentioned glass-made matrix, the monomer composition containing copper ions prepared as mentioned above was injected, and the polymerization reaction was sequentially carried out at different temperatures, i.e., 16 hours at 45°C, 28 hours at 60°C, and then 3 hours at 90°C, whereby a crosslinked polymer containing copper ion was obtained. When the refractive index of thus obtained crosslinked polymer was measured by a method similar to that of Example 2, it was found to be 1.517 at a wavelength of 546 nm.

When the form of the phase-grating-formed surface of thus obtained copper-ion-containing plastic-made replica was measured with a stylus type thickness meter by a method similar to that of Example 1, it was found to have a form substantially similar to that exemplified in Example 1 (trapezoidal waveform (having smoothed shoulder parts) having a grating pitch of 0.424 mm and a grating depth of 416 nm, and satisfying both (Condition 1) and (Condition 2)). The trapezoidal coefficient (B/A) was 0.165.

Its MTF at 550 nm measured by a method similar to that of Example 2 was 96.5% at 10 spatial frequencies/mm.

Comparative Example

(Simulation of Trapezoidal Grating)

Since it was practically difficult to make a trapezoidal grating such as that shown in Fig. 1, the MTF of the trapezoidal grating such as that shown in Fig. 1 (grating height = 416 nm, pitch = 0.424 mm) was determined by simulation. The light wavelength at the time of simulation was 550 nm, and the refractive index used was 1.517.

As a result of the above-mentioned simulation, the MTF value at a spatial frequency of 10/mm was 96.0%. (Simulation Condition)

Main parameters at the time of simulation: The form has an isosceles trapezoidal unit and is vertically symmetrical. Calculated by determining the autocorrelation function of the grating according to the above-mentioned literatures (APPLIED OPTICS vol. 11, No. 11, p. 2463-2472 (1972); Journal of the SMPTE Vol. 81, p. 282-285).

Example 4

Subsequently, methods similar to those of Examples 1 to 3 were used so as to prepare replica samples having the same grating pitch and grating height as those of the trapezoidal waveform grating prepared in Example 3, while having values of u'/u, v'/v, w'/w, and x'/x different from those of Example 1, and their MTF values were measured at a spatial frequency of 10/mm, whereby the following results were obtained:

| | u'/u, v/v', w'/w, x'/x | trapezoidal coefficient | MTF at 10/mm |
|---|---|---|---|
| (1) | 0.90 | 0.0066 | 96.2% |
| (2) | 0.83 | 0.02 | 96.3% |
| (3) | 0.37 | 0.2 | 96.7% |
| (4) | 0.05 | 0.46 | 97.2% |

Example 5

(Preparation of Double-Sided Grating)

(Grating A): A method similar to that of Example 1 was used, so as to form a grating having a grating pitch of 0.40 mm and a grating height of 420 nm on a glass substrate surface.

u'/u, v'/v, w'/w, and x'/x = 0.75
trapezoidal coefficient = 0.08

(Grating B): Further, a method similar to that of Example 1 was used, so as to form a grating having a grating pitch of 0.24 mm and a grating height of 430 nm on a glass substrate surface.

u'/u, v'/v, w'/w, and x'/x = 0.75
trapezoidal coefficient = 0.08

The grating formed on each of the above-mentioned glass substrate was a linear grating.

Subsequently, a cavity (having a thickness of 1 mm) was formed between the glass substrate formed with the grating A and the glass substrate formed with the grating B by a method similar to that of Example 2, where the respective surfaces formed with the gratings A and B as mentioned above were oriented to face the inside of the cavity (formed between the glass substrates) with their respective linear gratings forming an angle of 89°.

Then, polymerization was effected in compliance with the method of Example 3, so as to yield an optical low-pass filter having phase gratings formed on both sides thereof with their linear gratings forming an angle of 89° therebetween. When the forms of the gratings on both sides of thus obtained optical low-pass filter were measured by a method similar to that of Example 1, it was confirmed that their surface forms were identical to those of the glass sheets

used as their molds.

Further, the MTF at a wavelength of 550 nm was measured by a method similar to that of Example 2. Upon this measurement, the grating lines of the phase grating having a grating pitch of 0.4 mm were set (mounted) perpendicularly to the horizontal direction of the MTF apparatus and evaluated.

As a result of the above-mentioned evaluation, thus prepared phase gratings exhibited cutoff characteristics in the MTF in horizontal and vertical directions, and yielded high MTF values in a low spatial frequency region, i.e., 96.5% and 96.6%, respectively.

Further, when the above-mentioned filter was mounted to an imaging system portion of a CCD camera having a 1/4-inch, 270,000-pixel CCD at a position about 2 mm in front of the CCD (on the object side), and was evaluated in terms of an image (image of a resolution chart), a vivid and good image free of moire in both horizontal and vertical directions was obtained.

**Industrial Applicability**

As explained above, the present invention provides a phase type diffraction grating having a trapezoidal waveform cross section on at least a grating surface side thereof, wherein a trapezoidal portion A to J of one unit period constituting the trapezoidal wave comprises four lines constituting an upper side part, a lower side part, and two oblique sides indicated in the following (Definition) and four curves connecting them, the lines constituting the upper side part, lower side part, and two oblique sides satisfying the following (Condition 1), whereas the curves connecting the lines to each other satisfying the following (Condition 2).

(Definition of Trapezoidal Portion)

The trapezoidal portion comprising curve AB, line BC, curve CD, line DE, curve EF, line FG, curve GH, line HI, and curve IJ;

the height of the trapezoidal portion: d;
the period of the trapezoidal portion: p;
the lines whose inclinations are first-order differential coefficients at intersections k, l, m between a line at a height of d/2 and the trapezoidal portion: OP, QR, ST;
the line connecting points of the trapezoidal waveform at a height of 0: PT
the line connecting points of the trapezoidal waveform at a height of d: OS;
the trapezoidal wave constituted by the tangents OP, QR, ST and lines PQ, RS: P to T;
the lengths of the upper side, lower side, and two oblique sides of the trapezoidal wave as projected onto the line PT: u, v, w, and x, respectively;
the lengths of the upper side part line FG, lower side part line BC, and lines DE and HI constituting the two oblique sides in the trapezoidal portion A to J of one unit period constituting the trapezoidal wave as projected onto the line PT: u', v', w', and x', respectively.

(Condition 1)

$$0 \leq u'/u < 0.90$$

$$0 \leq v'/v < 0.90$$

$$0 \leq w'/w < 0.90$$

$$0 \leq x'/x < 0.90$$

(where $u + v + w + x = p$.)

(Condition 2)

The curve AB constitutes a part of a curve which is downward convex;

the curve CD constitutes a part of a curve which is downward convex;

the curve EF constitutes a part of a curve which is upward convex;
the curve GH constitutes a part of a curve which is upward convex; and
the curve IJ constitutes a part of a curve which is upward convex.

Further, the present invention provides a phase type diffraction grating having a trapezoidal waveform cross section on at least a grating surface side thereof, wherein a trapezoidal coefficient (B/A) of the trapezoidal wave is 0.006$$leSS*B/A*<1 (where A is the difference in area between a "complete trapezoid" circumscribing the trapezoidal wave and a "sine curve" inscribed in the "complete trapezoid"; and B is the difference in area between the "complete trapezoid" and "trapezoidal wave").

Furthermore, the present invention provides a method of making a phase type diffraction grating comprising the steps of: using a masking member disposed on a grating-pattern-deposition surface of a substrate, the masking member having a plurality of linear members, each having a circular cross section, arranged parallel to each other; and depositing, by vacuum vapor deposition from the masking member side to the substrate surface, a grating pattern shaped like a trapezoidal wave onto the substrate.

When the phase type diffraction grating having the above-mentioned configuration in accordance with the present invention is used, it is possible to reduce higher-order diffracted light components of a conventional phase grating having a trapezoidal form, and suppress the decrease in MTF in- the low spatial frequency region. As a consequence, the phase type diffraction grating of the present invention can suitably be used, in particular, as an optical low-pass filter for preventing aliasing (waveform distortion) from occurring when images are discretely obtained by means of imaging devices such as CCD (Charge-Coupled Device) in optical devices such as video camera, electronic still camera, digital camera, and the like.

**Claims**

**1.** A phase type diffraction grating having a trapezoidal waveform cross section on at least a grating surface side thereof, wherein a trapezoidal portion A to J of one unit period constituting said trapezoidal wave comprises four lines constituting an upper side part, a lower side part, and two oblique sides indicated in the following (Definition) and four curves connecting said lines, said lines constituting said upper side part, lower side part, and two oblique sides satisfying the following (Condition 1), whereas said curves connecting said lines to each other satisfying the following (Condition 2).
(Definition of Trapezoidal Portion)

The trapezoidal portion comprising curve AB, line BC, curve CD, line DE, curve EF, line FG, curve GH, line HI, and curve IJ;
the height of the trapezoidal portion: d;
the period of the trapezoidal portion: p;
the lines whose inclinations are first-order differential coefficients at intersections k, l, m between a line at a height of d/2 and the trapezoidal portion: OP, QR, ST;
the line connecting points of the trapezoidal waveform at a height of 0: PT
the line connecting points of the trapezoidal waveform at a height of d: OS;
the trapezoidal wave constituted by the tangents OP, QR, ST and lines PQ, RS: P to T;
the lengths of the upper side, lower side, and two oblique sides of the trapezoidal wave as projected onto the line PT: u, v, w, and x, respectively;
the lengths of the upper side part line FG, lower side part line BC, and lines DE and HI constituting the two oblique sides in the trapezoidal portion A to J of one unit period constituting the trapezoidal wave as projected onto the line PT: u', v, w', and x', respectively.
(Condition 1)

$$0 \le u'/u < 0.90$$

$$0 \le v'/v < 0.90$$

$$0 \le w'/w < 0.90$$

$$0 \le x'/x < 0.90$$

(where $u + v + w + x = p$ .)

(Condition 2)

The curve AB constitutes a part of a curve which is downward convex;
the curve CD constitutes a part of a curve which is downward convex;
the curve EF constitutes a part of a curve which is upward convex;
the curve GH constitutes a part of a curve which is upward convex; and
the curve IJ constitutes a part of a curve which is upward convex.

**2.** A phase type diffraction grating having a trapezoidal waveform cross section on at least a grating surface side thereof, wherein a trapezoidal coefficient (B/A) of said trapezoidal wave is $0.006 \leq B/A < 1$ (where A is the difference in area between a "complete trapezoid" circumscribing said trapezoidal wave and a "sine curve" inscribed in said "complete trapezoid"; and B is the difference in area between said "complete trapezoid" and "trapezoidal wave").

**3.** A phase type diffraction grating according to claim 1 or 2, wherein each side of a filter substrate has a grating having a cross section with said trapezoidal waveform, and wherein said grating on one side of said filter substrate and said grating on the other side of said filter substrate form an angle of 80° to 100° therebetween.

**4.** A phase type diffraction grating according to any of claims 1 to 3, wherein at least a part thereof contains a polymer constituted by a phosphate-group-containing monomer represented by the following formula (1) and copper ion:

$$PO(OH)_n R_{3-n} \qquad (1)$$

Where R is

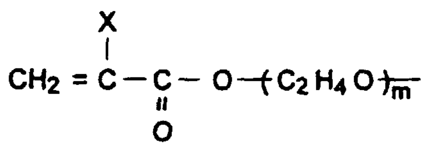

(wherein x indicates a hydrogen atom or methyl group, m indicates an integer from 1 to 5, and n is 1 or 2).

**5.** A method of making a phase type diffraction grating comprising the steps of:

using a masking member disposed on a grating-pattern-depositing surface of a substrate, said masking member having a plurality of linear members, each having a circular cross section, arranged parallel to each other; and
depositing, by vacuum vapor deposition from said masking member side to said substrate surface, a grating pattern shaped like a trapezoidal wave onto said substrate.

**6.** A method of making a phase type diffraction grating according to claim (5), wherein a glass sheet is used as said substrate, said grating pattern shaped like a trapezoidal wave is deposited on said glass sheet so as to form a matrix, and a replica of said matrix is obtained by injection polymerization.

*Fig.1*

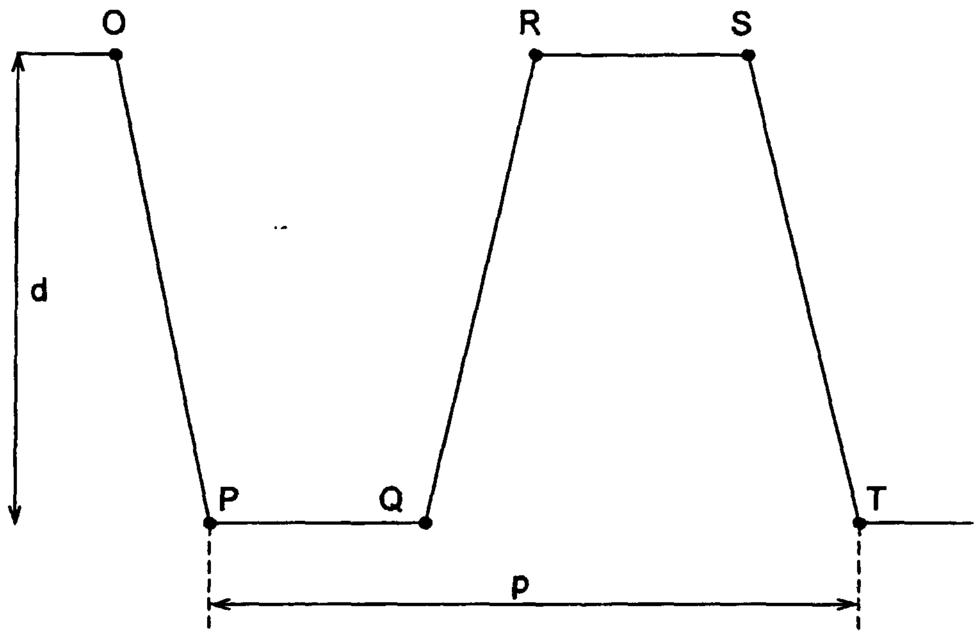

*Fig.2*

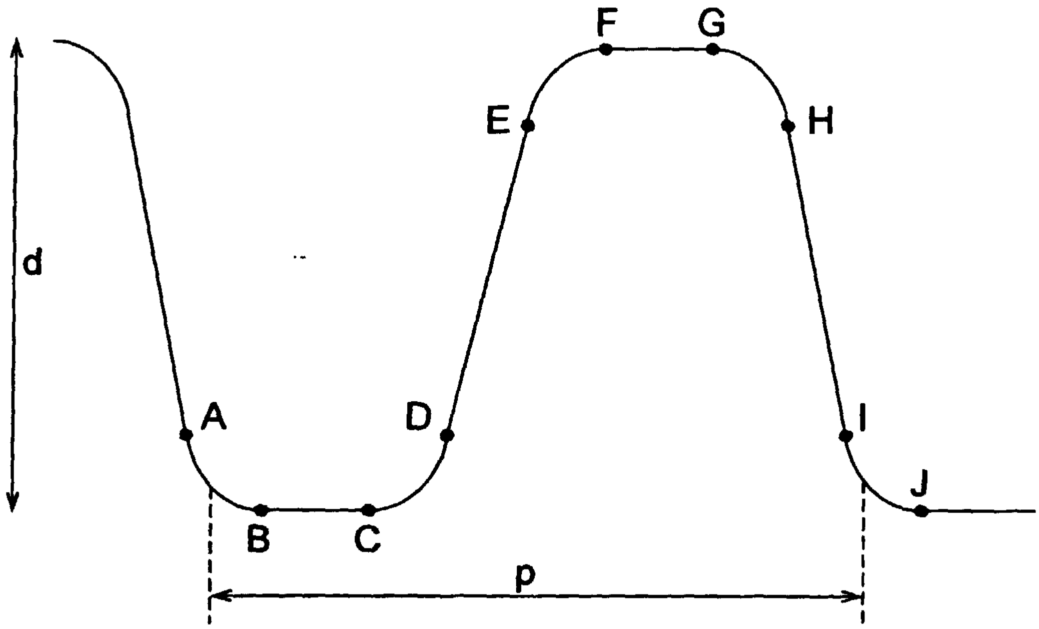

# Fig.3

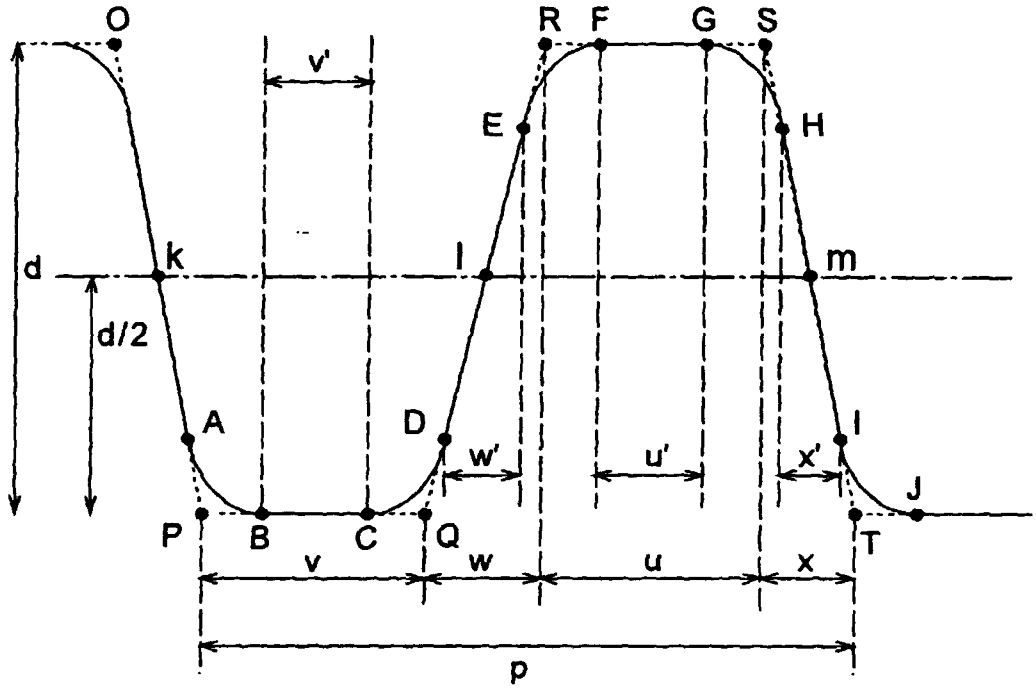

*Fig.4*

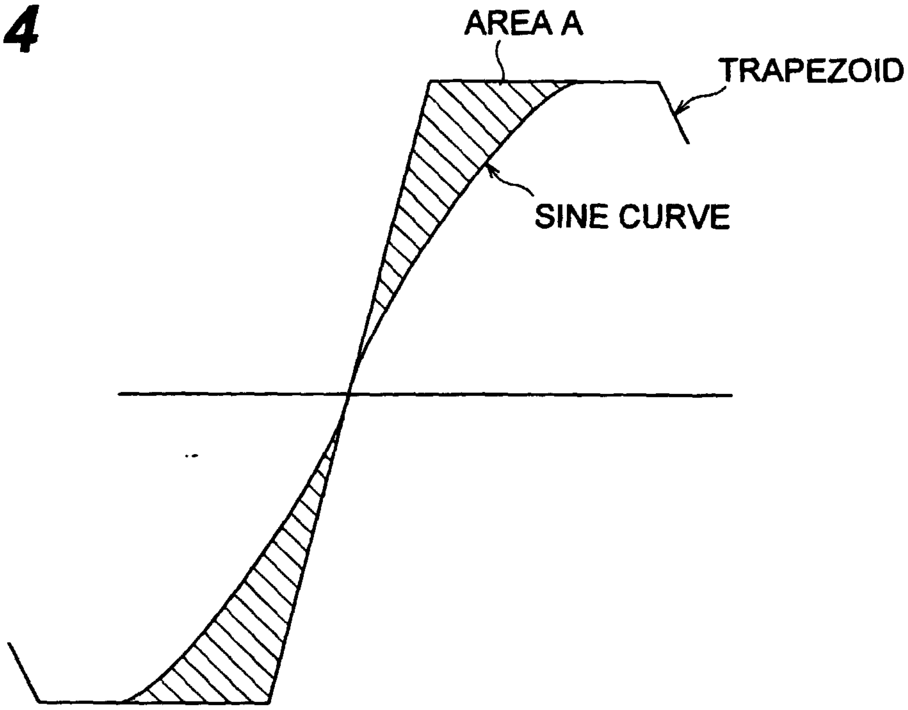
AREA A
TRAPEZOID
SINE CURVE

*Fig.5*

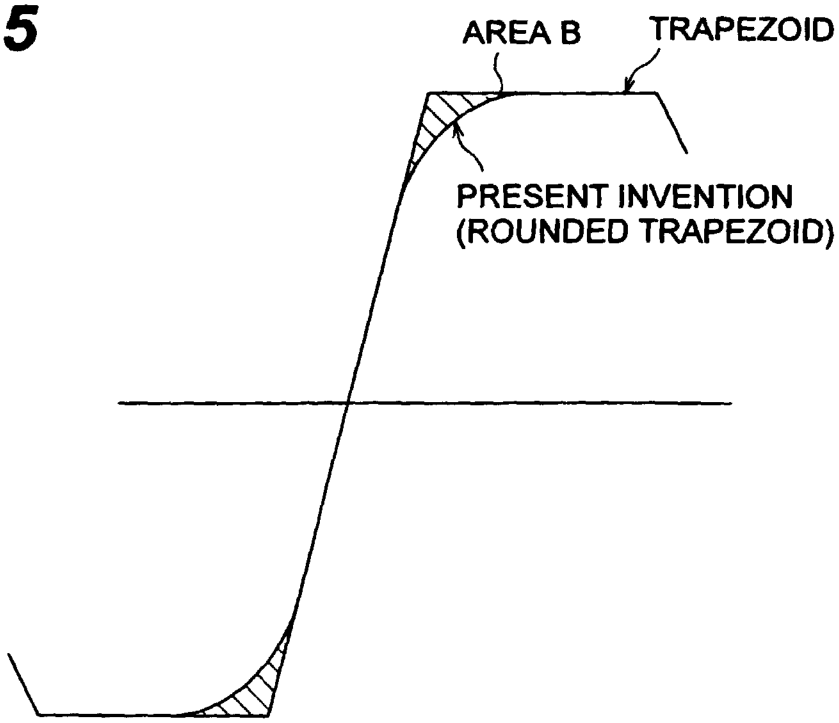
AREA B
TRAPEZOID
PRESENT INVENTION
(ROUNDED TRAPEZOID)

Fig.6

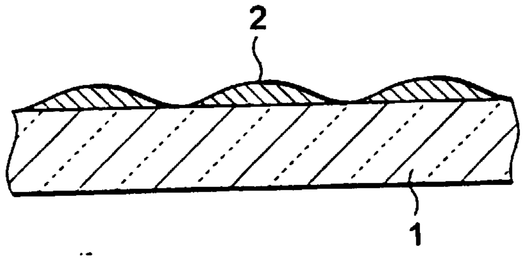

Fig.7

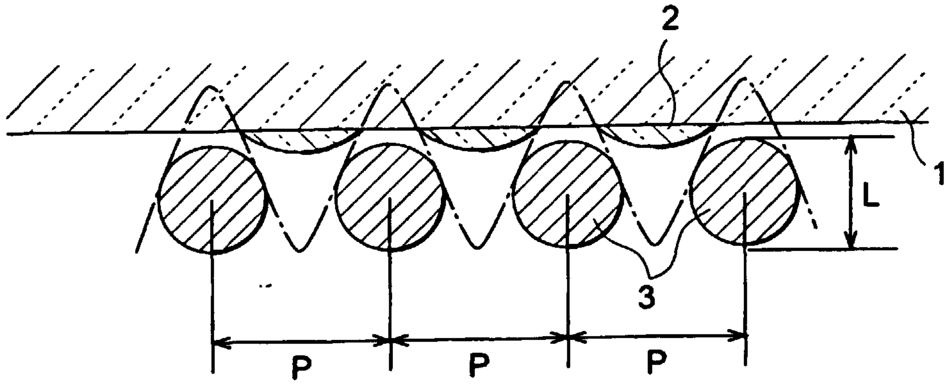


Fig.8

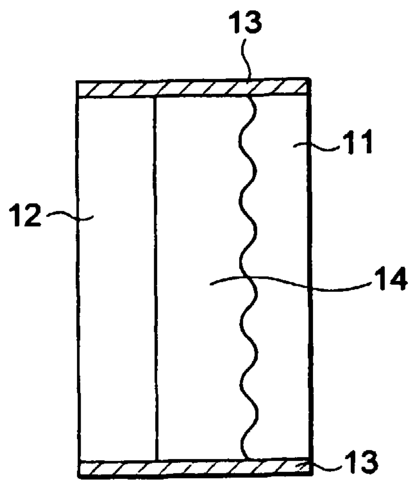

*Fig.9*

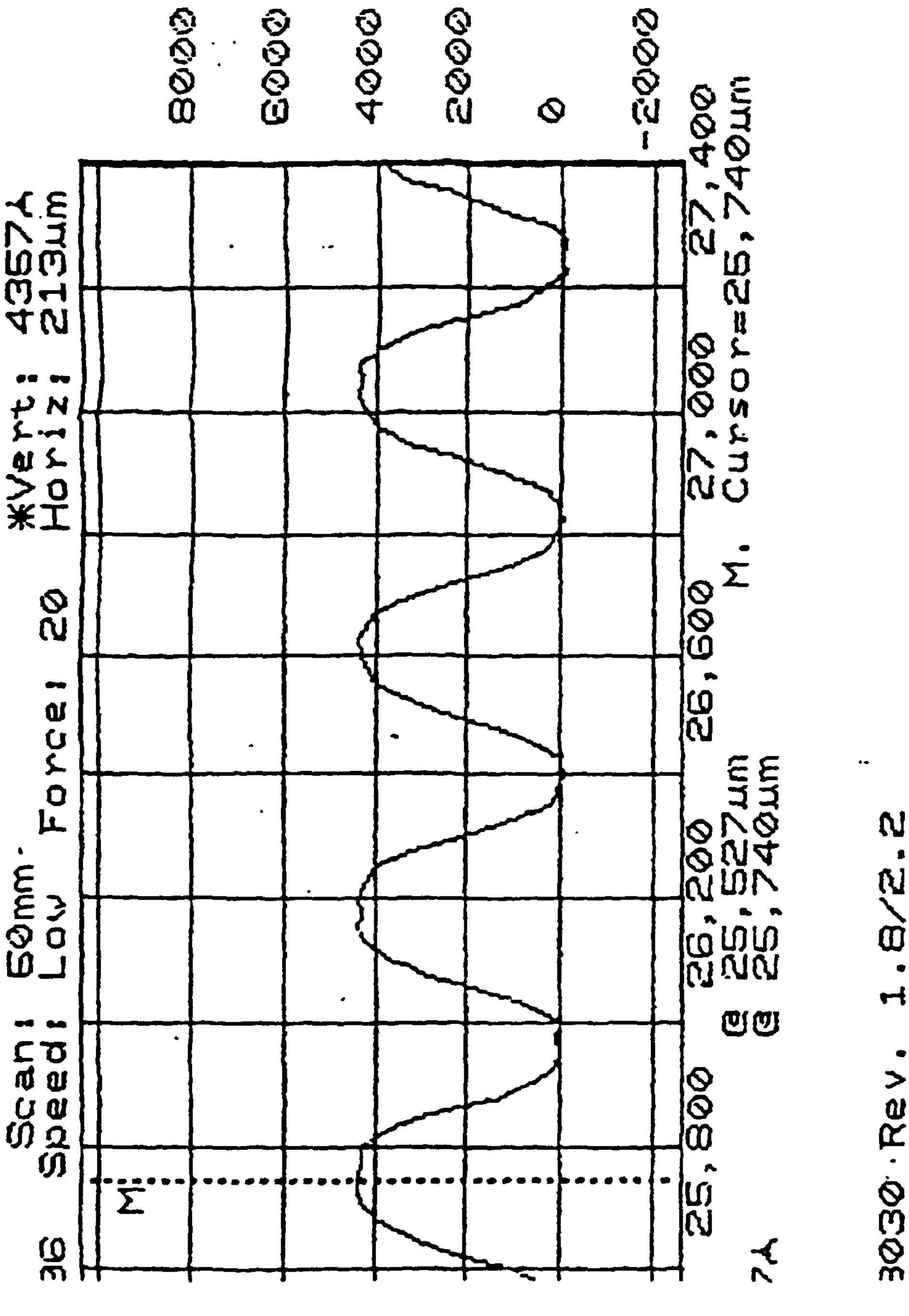
Scan: 60mm Force: 20 *Vert: 4357Å
Speed: Low Horiz: 213um
8000
6000
4000
2000
0
-2000
M
25,800
26,200
26,600
27,000
27,400
@ 25,527um
@ 25,740um
M. Cursor=25,740um
3030 Rev. 1.8/2.2

# INTERNATIONAL SEARCH REPORT

International application No.
PCT/JP97/04419

A. CLASSIFICATION OF SUBJECT MATTER
Int.Cl[6] G02B5/18, G02B27/46

According to International Patent Classification (IPC) or to both national classification and IPC

B. FIELDS SEARCHED

Minimum documentation searched (classification system followed by classification symbols)
Int.Cl[6] G02B5/18, G02B27/46, H04N9/04-9/11, C23C14/00-14/58

Documentation searched other than minimum documentation to the extent that such documents are included in the fields searched

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP, 4-297567, A (Hoya Corp.), October 21, 1992 (21. 10. 92) & US, 5380558, A & DE, 4210079, A | 1-6 |
| A | JP, 53-119063, A (Minolta Co., Ltd.), October 18, 1978 (18. 10. 78) Page 3, lower left column, line 13 to lower right column, line 8 ; Fig. 9 & US, 4178611, A | 1-2 |
| A | JP, 57-89721, A (Victor Co. of Japan, Ltd.), June 4, 1982 (04. 06. 82), Claims ; Figs. 4, 5 (Family: none) | 1-2 |
| A | JP, 63-161425, A (Sony Corp.), December 24, 1988 (24. 12. 88) & US, 4878737, A & CA, 1305884, C | 1-4 |
| A | JP, 2-132413, A (Canon Inc.), May 21, 1990 (21. 05. 90) & US, 4998801, A | 1-4 |

[X] Further documents are listed in the continuation of Box C. [ ] See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| March 5, 1998 (05. 03. 98) | March 17, 1998 (17. 03. 98) |
| Name and mailing address of the ISA/ Japanese Patent Office | Authorized officer |
| Facsimile No. | Telephone No. |

Form PCT/ISA/210 (second sheet) (July 1992)

**INTERNATIONAL SEARCH REPORT**

International application No.
PCT/JP97/04419

C (Continuation). DOCUMENTS CONSIDERED TO BE RELEVANT

| Category* | Citation of document, with indication, where appropriate, of the relevant passages | Relevant to claim No. |
|---|---|---|
| A | JP, 6-59218, A (Matsushita Electric Industrial Co., Ltd.), March 4, 1994 (04. 03. 94) & EP, 585638, A1 & US, 5434709, A | 1-4 |
| A | JP, 5-66370, A (Matsushita Electric Industrial Co., Ltd.), March 19, 1993 (19. 03. 93) & EP, 531926, A1 & US, 5237452, A | 1-4 |
| A | JP, 8-304615, A (Fuji Photo Optical Co., Ltd.), November 22, 1996 (22. 11. 96) (Family: none) | 1-4 |
| A | JP, 6-118228, A (Kureha Chemical Industry Co., Ltd.), April 28, 1994 (28. 04. 94) & EP, 586135, A2 & US, 5466755, A | 4 |
| A | JP, 8-75919, A (Kureha Chemical Industry Co., Ltd.), March 22, 1996 (22. 03. 96) & EP, 706067, A1 & US, 5611965, A | 4 |
| P | JP, 9-263932, A (Kureha Chemical Industry Co., Ltd.), October 7, 1997 (07. 10. 97) & EP, 798571, A2 | 5, 6 |
| A | JP, 59-16435, B2 (Matsushita Chemical Industry Co., Ltd.), April 16, 1984 (16. 04. 84) (Family: none) | 5, 6 |

Form PCT/ISA/210 (continuation of second sheet) (July 1992)